(19) **Europäisches Patentamt / European Patent Office / Office européen des brevets**

(11) **EP 1 488 550 B1**

(12) **EUROPEAN PATENT SPECIFICATION**

(45) Date of publication and mention of the grant of the patent:
**09.05.2007 Bulletin 2007/19**

(21) Application number: **02718200.5**

(22) Date of filing: **22.03.2002**

(51) Int Cl.:
**H04B 10/18** (2006.01)

(86) International application number:
**PCT/EP2002/003250**

(87) International publication number:
**WO 2003/081814 (02.10.2003 Gazette 2003/40)**

(54) **OPTICAL TRANSMISSION SYSTEM USING AN OPTICAL PHASE CONJUGATION DEVICE**

OPTISCHES ÜBERTRAGUNGSSYSTEM MIT EINER OPTISCHEN PHASENKONJUGATIONSVORRICHTUNG

SYSTEME DE TRANSMISSION OPTIQUE UTILISANT UN DISPOSITIF A CONJUGAISON OPTIQUE DE PHASE

(84) Designated Contracting States:
**AT BE CH CY DE DK ES FI FR GB GR IE IT LI LU MC NL PT SE TR**

(43) Date of publication of application:
**22.12.2004 Bulletin 2004/52**

(73) Proprietor: **Pirelli & C. S.p.A.**
**20123 Milano (IT)**

(72) Inventors:
- **ALBERTI, Francesco**
  **I-22078 Turate (IT)**
- **MINZIONI, Paolo**
  **I-27100 Pavia (IT)**
- **SCHIFFINI, Alessandro**
  **I-20121 Milano (IT)**

(74) Representative: **Giannesi, Pier Giovanni**
**Pirelli & C. S.p.A.,**
**Viale Sarca, 222**
**20126 Milan (IT)**

(56) References cited:
**EP-A- 1 133 031**   **DE-A- 19 622 010**
**US-B1- 6 304 348**

- **SOTOBAYASHI H ET AL: "Effects of asymmetric power change on BER performance using midway optical phase conjugation for fading cancellation in 60 GHz millimetre-wave optical DSB signal transmission over 100 km non-dispersion-shifted fibre" ELECTRONICS LETTERS, IEE STEVENAGE, GB, vol. 35, no. 12, 10 June 1999 (1999-06-10), pages 992-993, XP006012235 ISSN: 0013-5194**

**Description**

The present invention relates to an optical transmission system using an optical phase conjugation device.

Long-distance optical transmission systems have been constructed by using erbium-doped fiber amplifiers (EDFA's) as in-line optical repeaters. Signal attenuation due to fiber loss is periodically compensated for by the optical amplifier gain to overcome the limitation of transmission distance. Since, in such systems, signal power is maintained at a high level along the entire system length owing to the periodic amplification, the dependence of fiber refractive index on optical power can no longer be ignored. This nonlinear effect, called the Kerr effect, leads to the self-phase modulation (SPM) of optical pulses, which in turn interplays with the group-velocity dispersion (GVD), or chromatic dispersion, in the fiber, causing nonlinear waveform distortion. In order to realize long-distance (e.g. 1000-2000 km or more) signal transmission at high data transmission rate (e.g. 40 Gbit/s or more) this waveform distortion must be counteracted.

Optical phase conjugation (OPC) is a known technique for chromatic dispersion compensation. Details may be found in G.P. Agrawal, *"Fiber-Optic Communication Systems",* A Wiley Interscience Publication, (1997), at paragraph 9.7. As explained by Agrawal, under certain conditions, OPC can compensate simultaneously for both GVD and SPM. Pulse propagation in a lossy optical fiber is governed by the Non-Linear Schrödinger Equation (NLSE)

$$\frac{\partial A}{\partial z} + \frac{i}{2}\beta_2 \frac{\partial^2 A}{\partial t^2} = i\overline{\gamma}|A^2|A - \frac{1}{2}\alpha A \qquad [1]$$

where $A=A(z, t)$ represents a slowly varying amplitude of a pulse envelope, $\beta_2$ is the GVD coefficient of the optical fiber, related to the dispersion parameter $D$ by the following relation

$$D = -\frac{2\pi c}{\lambda^2}\beta_2 \qquad [2]$$

$\overline{\gamma}$ is the nonlinear coefficient of the optical fiber, i.e. governs the SPM, and $\alpha$ accounts for the fiber loss. When $\alpha = 0$ (lossless case), $A^*$ satisfies the same equation when one takes the complex conjugate of eq.[1] and changes $z$ to $-z$. As a result, midspan OPC can compensate for SPM and GVD simultaneously. Clearly, such case is immaterial, as fiber losses cannot be practically avoided.

In order to study the impact of the fiber loss, the following substitution may be made

$$A(z,t) = B(z,t)\exp(-\alpha z/2) \qquad [3]$$

so that eq.[1] can be written as

$$\frac{\partial B}{\partial z} + \frac{i}{2}\beta_2 \frac{\partial^2 B}{\partial t^2} = i\gamma z|B|^2 B \qquad [4]$$

where $\gamma(z) = \overline{\gamma}\exp(-\alpha z)$. By taking the complex conjugate of eq.[4] and changing $z$ to $-z$, it can be seen that perfect SPM compensation can occur only if $\gamma(z) = \gamma(L - z)$, where $L$ is the total system length. This condition cannot be satisfied for $\alpha \neq 0$.

One may think that the problem can be solved by amplifying the signal after midspan OPC such that the signal power becomes equal to the input power before the signal is launched in the second-half section of the fiber link. Although such an approach can reduce the impact of SPM, actually it does not lead to a satisfactory compensation of the SPM. Perfect SPM compensation can occur only if the power variations are symmetric around the midspan point where the OPC is performed so that $\gamma(z) = \gamma(L - z)$ in eq.[4]. In practice, signal transmission does not satisfy this property. One can come close to SPM compensation if the signal is amplified often enough that the power does not vary by a large amount during each amplification stage. This approach is, however, not practical since it requires closely spaced amplifiers.

S. Watanabe, in patent US 6,175,435, considers a phase conjugator disposed between a transmission line I (of length $L_1$) and a transmission line II (of length $L_2$). After a series of calculations, he obtains the following equations for GVD and SPM compensation:

$$D_1 L_1 = D_2 L_2 \qquad [5]$$

$$\gamma_1 \overline{P_1} L_1 = \gamma_2 \overline{P_2} L_2 \qquad [6]$$

where $\overline{P}_1$ and $\overline{P}_2$ denote the average powers in the transmission lines I and II, respectively. Also, $D_1$, and $\gamma_1$ denote the dispersion parameter and the nonlinear coefficient in the transmission line I, respectively; and $D_2$ and $\gamma_2$ denote the dispersion parameter and the nonlinear coefficient in the transmission line II, respectively. According to the patent, complete compensation can be realized by providing, at positions equivalently symmetrical with respect to the phase conjugator, the same ratio of the optical Kerr effect to the dispersion. An increase of this ratio along the transmission line can be attained by gradually decreasing the dispersion or gradually increasing the optical Kerr effect. It is possible to change the dispersion value by adequately designing the fiber. For example, the above ratio is changeable by changing the zero dispersion wavelength of a dispersion shift fiber (DSF) or by changing the relative refractive index between the core and the clad of the fiber or the core diameter thereof. Meanwhile, change of the optical Kerr effect can be achieved by changing the nonlinear refractive index of the light intensity. According to Watanabe, a suitable optical fiber can be manufactured by continuously changing at least one fiber parameter selected from the loss, nonlinear refractive index, mode field diameter and dispersion.

In Applicant's opinion, the use of such kinds of "special" fibers does not represent an optimal solution, as such fibers may be complex to manufacture. Further, such method does not apply to optical systems already installed, unless a substitution of all the fibers of the system is performed.

C. Lorattanasane et al., in "Design Theory of Long-Distance Optical Transmission Systems Using Midway Optical Phase Conjugation" Journal of Lightwave Technology, vo1.15, no.6, pages 948-955 (1997), describe a design method for suppressing the residual waveform distortion due to periodic power variation in an optical amplifier chain and to dispersion value fluctuation from span to span along a midway optical phase conjugation system. According to the authors, the amplifier spacing must be short relative to the nonlinearity length and signal pulses must be transmitted within appropriate windows of fiber dispersion. Computer simulation results reported in the article show that short amplifier spacing (40-50 km) is required for long-distance systems, whereas, for short-distance systems less than 1000 km, the amplifier spacing as long as 100 km is possible.

In Applicant's opinion, an amplifier spacing as long as 100 km also for long distance systems, having a length higher than 1000 km, is preferred, in order to reduce the number of installed amplifiers.

EP patent application no. 1,133,031, to Lucent Technologies Inc., discloses an optical transmission system with reduced Kerr effect nonlinearities. The system is formed to include an optical phase conjugator at alternate repeater sites to minimize the presence of four-wave mixing and other Kerr effect nonlinearities in systems using optical fiber transmission paths. Raman gain is included in each fiber span (or in alternate fiber spans) so as to provide a "negative absorption" along the length of the fiber and thereby provide for essentially symmetrical power distribution along the length of each span. The authors show the simulation results obtained in a 40 Gb/s, 10x80 km WDM network.

However, Applicant has found that the symmetry in the power distribution obtainable with Raman amplification may be still not enough in order to compensate for nonlinearities in longer systems. Actually, the same fig.6 of the '031 patent application shows (even if only schematically) a not perfect symmetry of the power distribution in each span, with a power decrease in the first part of the span having a lesser slope than the slope of the power increase in the second part of the span due to the Raman amplification. As it will be shown hereinafter, Applicant has found that such residual asymmetry in the power distribution may still cause high penalties in systems longer than 1000 km, in particular with high span lengths (e.g. about 100 km).

WO patent application no. 99/05805, to British Telecommunications PLC, discloses a method for symmetrised mid-span spectral inversion (MSSI), where the high power regions in the optical communication system are symmetrised about the MSSI means. The amplifiers are positioned so as to have the high-power regions in the two sections of the transmission link symmetrical about the mid-point of the transmission network, where MSSI is performed. These high-power regions are the length of fiber immediately after the fiber amplifier which is substantially equal to the effective nonlinear length $(L_{eff})$ of the optical transmission link. The distance from the amplifier preceding the phase conjugator to the phase conjugator is $L_A$ and the distance from the phase conjugator to the subsequent amplifier is $L_B$. The distances $L_A$ and $L_B$ are given by

$$L_A = \frac{L_{amp} + L_{eff}}{2} \qquad L_B = \frac{L_{amp} - L_{eff}}{2} \qquad [7]$$

where $L_{amp} = L_A + L_B$ is the amplifier spacing. In an example, $L_{amp}$ is 80 km, $L_{eff}$ is 21.5 km, so that the MSSI equipment would be sited at a distance of $\approx$ 51 km from the preceding amplifier. With an odd number of spans, if it is not possible to place the MSSI equipment at a location other than an amplifier site, the author suggests to add a length of fiber $L_{amp}$ - $L_{eff}$ kilometers long immediately after the MSSI equipment at the amplifier location. Thus a length of fiber of 58.5 km would be added. With an even number of spans, the MSSI equipment is sited immediately upstream of the optical amplifier and a length of fiber $L_{eff}$ kilometers long is sited immediately upstream of the MSSI equipment. The author admits it may be necessary to insert additional amplifiers to give the symmetrical positioning of the high-power regions or if the optical signal levels are sufficiently low so as to cause bit error rate degradation.

In Applicant's opinion, a positioning of the optical phase conjugator very far from an amplifier (e.g. about 50 km) has a drawback in that the optical line has to be provided with a dedicated site for the MSSI equipment, in addition to the amplifier sites. Even when lengths of fibers are added as suggested in the '805 patent application in order to place the MSSI equipment at an amplifier, an additional strong attenuation is added to the system (in particular with an odd number of spans), due to the high length of the added fibers, with the necessity of additional amplifiers to be provided to counteract such attenuation. Such additional amplifiers may, in turn, unbalance the power distribution along the line, so that nonlinearity compensation may be hindered.

The Applicant has tackled the problem of reducing distortion caused by nonlinearity in optical systems having long span lengths, or, more generally, in optical systems in which the power of the optical signal significantly varies along the spans, so that portions of spans which are subject to high power (i.e. up to a maximum power $P_{max}$) alternate with portions of spans which are subject to low power (e.g. $\frac{1}{e}P_{max}$) along the optical line (that is, very different with respect to a "lossless system").

The Applicant has found that in these conditions the asymmetry of the power distribution along the length of each span, which asymmetry may remain even in case of use of distributed counter-propagating Raman amplification together with lumped amplification, may hinder the positive effect of the use of an OPC device for reducing distortion due to nonlinearity.

The Applicant has found that the negative effect of the asymmetry of the power distribution in the spans may be substantially reduced by positioning the optical phase conjugation device in an optimum region downstream from the output of an amplifier (or, more generally, of a gain module, as defined in the following) disposed along the optical line. For the purposes of the present invention the terms "upstream" and "downstream" are to be intended with reference to the direction of an optical signal traveling on the optical line. The optimum region is arranged downstream from the output of the amplifier at a distance around one half of an "asymmetry length", defined in the remainder of the description, which depends on the attenuation of the fiber, on the power distribution along the spans and, to some extent, on the span length: in case of sole use of lumped amplifiers, such as for example erbium-doped fiber amplifiers, the "asymmetry length" is in practice the effective length $L_{eff}$ of the transmission fiber used in the optical line. In case of use of distributed counter-propagating Raman amplification, the "asymmetry length" may be lower than $L_{eff}$.

By positioning the optical phase conjugation device at the distance above specified downstream from the output of a mid-span gain module, that is a gain module disposed roughly in the middle of the optical line, both a substantial reduction of the impairment due to nonlinearity and compensation of chromatic dispersion may be obtained. As the effective length of typical optical fibers is of about 20 km, the optical phase conjugation device may be disposed at a distance from the output of the amplifier of only about 10 km or less when lumped amplification is used. Use of counter-propagating Raman amplification in alternative or in addition to lumped amplification may reduce the value of the "asymmetry length", thus further reducing the distance of the optical conjugation device from the output of the gain module to values of the order of 5-7 km.

Advantageously, the optical system may be planned so as to provide that the first length of fiber of the span comprising the optical phase conjugation device, between the output of the gain module and the input of the optical phase conjugation device, is disposed internally of the amplification site including the gain module immediately upstream from the optical phase conjugation device. Thus, the provision of a dedicated site for the optical phase conjugation device along the optical line may be avoided. In already installed, systems the optical phase conjugation device may still be disposed internally of an amplification site: in fact, a piece of additional fiber having a length of about one half of the "asymmetry length" may be disposed in the amplification site between the output of the gain module and the input of the optical phase conjugation device, with just a small increase of the overall attenuation of the span comprising the optical phase conjugation device. This limited increase in attenuation can be managed and counteracted by tuning other system parameters, such as the gain provided by the optical gain modules, for example. Thus, the provision of additional amplifiers for counteracting the increased attenuation may be avoided.

In a first aspect the invention relates to an optical system comprising: an optical fiber path suitable for propagating an optical signal at least in a first direction; a plurality M of optical gain modules disposed along the optical fiber path, so as to divide the optical fiber path in N spans of optical fiber having an average length $L_{amp}$ and comprising at least one transmission optical fiber having an attenuation $\alpha$, and an optical phase conjugation device disposed at a predetermined position along the optical fiber path, said optical signal having an asymmetric power distribution along said spans, so as to define an asymmetric length $L_{asy}$. In the invention system, said predetermined position is at a distance comprised between 0.1 $L_{asy}$ and 0.7. $L_{asy}$ downstream from the output of one of said optical gain modules.

In a second aspect the invention relates to a method for assembling an optical system comprising the steps of: providing a plurality M of optical gain modules adapted for amplifying an optical signal; connecting said plurality of optical gain modules by N spans of optical fiber so as to form an optical fiber path, said spans of optical fiber having an average length $L_{amp}$ and comprising at least one transmission optical fiber having an attenuation $\alpha$, disposing a phase conjugation device along the optical fiber path; said plurality of optical gain modules, said average length $L_{amp}$ and said attenuation $\alpha$ being suitable for obtaining an asymmetric power distribution of said optical signal along said spans characterized by an asymmetric length $L_{asy}$. In the invention method the disposition of the phase conjugation device is performed at a distance comprised between $0.1 \cdot L_{asy}$ and $0.7 \cdot L_{asy}$ downstream from the output of one of said optical gain modules.

In a third aspect the invention relates to a method of operating of an optical transmission system comprising an optical fiber path, comprising at least one transmission optical fiber having an attenuation $\alpha$ and a plurality of optical gain modules disposed along the optical fiber path so as to define a plurality of spans having an average length $L_{amp}$. The method comprises: inserting an optical signal at an input end of said optical fiber path; amplifying said optical signal along said spans, so as to obtain an asymmetric power distribution of said optical signal along said spans characterized by an asymmetric length $L_{asy}$; phase-conjugating said optical signal along the optical fiber path. The step of phase-conjugating is performed at a position along said optical fiber path being at a distance comprised between $0.1 \cdot L_{asy}$ and $0.7 \cdot L_{asy}$ downstream from the output of one of said optical gain modules.

In a fourth aspect the invention relates to a method of upgrading an optical transmission system comprising an optical fiber path, the optical fiber path including at least one transmission optical fiber having an attenuation $\alpha$ and a plurality of optical gain modules disposed along the transmission optical fiber so as to define a plurality of spans having an average length $L_{amp}$, said plurality of optical gain modules, said average length $L_{amp}$ and said attenuation $\alpha$ being suitable for obtaining an asymmetric power distribution of an optical signal propagating along said spans characterized by an asymmetric length $L_{asy}$. The method comprises disposing a phase conjugation device along the optical fiber path at a distance comprised between $0.1 \cdot L_{asy}$ and $0.7 \cdot L_{asy}$ downstream from the output of one of said optical gain modules.

Further features and advantages of the present invention will be better illustrated by the following detailed description, herein given with reference to the enclosed drawings, in which:

- Figure 1 schematically shows an optical transmission system according to the invention;

- Figures 2a and 2b schematically show two power profiles that can be obtained along the optical fiber path of the system of fig.1, respectively for a lumped erbium doped fiber amplifier and with a counter-propagating Raman pumping;

- Figures 3a and 3b show how the eye opening may worsen due to the onset of nonlinearity in a high power transmission system;

- Figure 4 schematically shows the power level in one span of a system using counter-propagating Raman amplification;

- Figures 5a and 5b show plots of two parameters suitable for calculating the asymmetric length $L_{asy}$;

- Figures 6a and 6b show plots of two functions, which intersections may be used for calculating the asymmetric length $L_{asy}$;

- Figure 7 shows a plot of the eye opening penalty versus the OPC device positioning, obtained at the end of a system comprising a chain of eighteen EDFAs spaced 100 km from each other, both for RZ and NRZ transmission;

- Figure 8a-b-c show respectively the eye opening at the input of the system used for fig.7, at the end of the same system with OPC positioning at the output of the mid-span amplifier, at the end of the same system with OPC positioning at a distance of $L_{asy}/2$ from the output of the mid-span amplifier for an exemplary RZ pulse;

- Figure 9a-b-c show respectively the eye opening at the input of the system used for fig.7, at the end of the same system with OPC positioning at the output of the mid-span amplifier, at the end of the same system with OPC positioning at a distance of $L_{asy}/2$ from the output of the mid-span amplifier for an exemplary NRZ pulse;

- Figure 10 shows a plot of the eye opening penalty versus the OPC device positioning, obtained at the end of a system comprising a chain of eighteen Raman gain modules (counter-propagating) spaced 100 km from each other, both for RZ and NRZ transmission;

- Figures 11a and 11b show the eye opening penalty versus the OPC device positioning near the position of an optical gain module, respectively in a system comprising EDFAs and in a system exploiting counter-propagating Raman amplification.

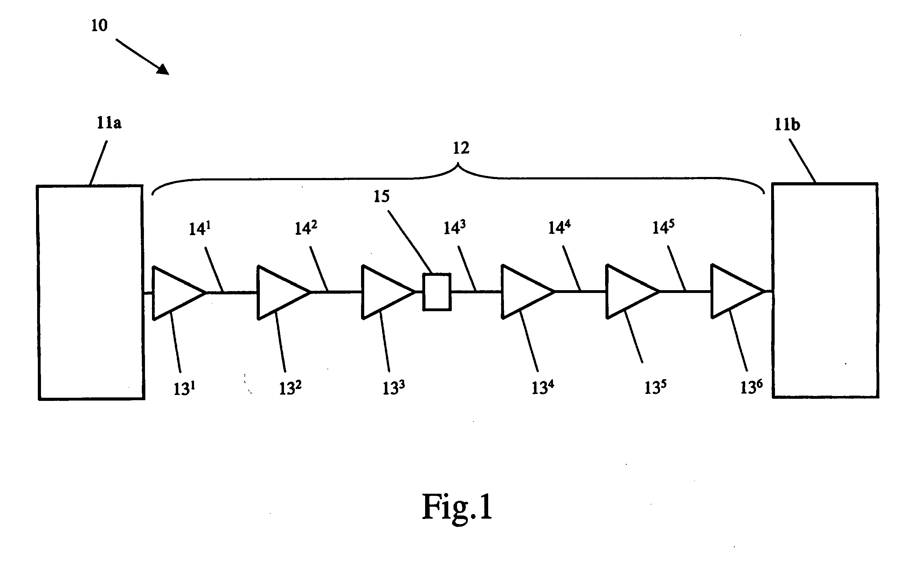

Fig.1 schematically shows an optical transmission system 10 according to the invention, comprising a transmitting station 11 a, adapted to transmit optical signals over an optical fiber path 12, and a receiving station 11 b, adapted to receive optical signals coming from the optical fiber path 12. The transmitting station 11 a comprises at least one transmitter. The receiving station 11 b comprises at least one receiver. For WDM transmission, stations 11 a, 11 b comprise a plurality of transmitters and receivers, for example twenty or thirty-two or sixty-four or one hundred transmitters and receivers. The transmission system may include transmitting and receiving stations and an optical fiber path for transmitting signals in a direction opposite to the direction of the optical fiber path 12. Terminal and line apparatuses operating in the two directions often share installation sites and facilities.

The transmitter or transmitters included in the transmitting station 11 a provide an optical signal to be coupled into the optical fiber path 12. Typically, each transmitter may comprise a laser source, adapted to emit a continuous wave optical signal having a predetermined wavelength, and an external optical modulator, for example a lithium niobate modulator, adapted to superimpose on the continuous wave optical signal emitted by the laser source a traffic signal at a predetermined high frequency or bit rate, such as for example 10 Gbit/s or 40 Gbit/s. Alternatively, the laser source may be directly modulated with the traffic signal. A preferred wavelength range for the optical signal radiation is between about 1460 nm and about 1650 nm. A more preferred wavelength range for the optical signal radiation is between about 1520 nm and about 1630 nm. Optical signals may be of the return-to-zero (RZ) format or non-return-to-zero (NRZ) format. Typically, in case of WDM transmission each transmitter may also comprise a variable optical attenuator, adapted to set a predetermined power level for each signal wavelength (pre-emphasis level). In case of WDM transmission, the different signal wavelengths emitted by the plurality of transmitters are multiplexed by a suitable multiplexing device on the optical fiber path 12. Such multiplexing device can be any kind of multiplexing device (or combination of multiplexing devices), such as a fused fiber or planar optics coupler, a Mach-Zehnder device, an AWG (Arrayed Waveguide Grating), an interferential filter, a micro-optics filter and the like.

Each receiver is adapted to convert an incoming optical signal in an electrical signal. Typically, this task may be provided by a photodetector. The receiver may also extract the traffic signal from the electrical signal. For a WDM transmission, a plurality of photodetectors is provided. A demultiplexing device allows to separate the different signal wavelengths from a single optical path to a plurality of optical paths, each terminating with a receiver. The demultiplexing device can be any kind of demultiplexing device (or combination of demultiplexing devices), such as a fused fiber or planar optics coupler, a Mach-Zehnder device, an AWG (Arrayed Waveguide Grating), an interferential filter, a micro-optics filter and the like.

The optical fiber path 12 comprises at least one transmission optical fiber. The transmission optical fiber used in the optical fiber path 12 is a single mode fiber. For example, it can be a standard single mode optical fiber (SMF), having chromatic dispersion between approximately +16 ps/(nm-km) and +20 ps/(nm·km) at a wavelength of 1550 nm, or a dispersion-shifted fiber (DSF), having a dispersion approaching zero at a wavelength of 1550 nm, or a non-zero dispersion fiber (NZD), with dispersion of between approximately 0.5 ps/(nm·km) and 4 ps/(nm·km), in absolute value, at a wavelength of 1550 nm, or a fiber of the half-dispersion-shifted type (HDS) having a positive dispersion which is intermediate between that of an NZD type fiber and a standard single-mode fiber. In order to reduce the occurrence of four-wave-mixing (FWM), the optical transmission fiber or fibers included in the optical fiber path 12 may preferably have a dispersion which is greater than or equal to approximately 0.5 ps/(nm·km), more preferably greater than or equal to 1 ps/(nm·km), in absolute value, at a wavelength of 1550 nm. Preferably, if the optical signals are of the RZ format, a transmission fiber having a chromatic dispersion higher than 15 ps/(nm·km) in absolute value at 1550 nm may be used, for example a SMF fiber. Preferably, if the optical signals are of the NRZ format, a transmission fiber having a negative chromatic dispersion lower than 10 ps/(nm·km) in absolute value at 1550 nm may be used.

A plurality of M optical gain modules is disposed along the optical fiber path 12, so as to divide the optical fiber path 12 in a plurality of fiber spans. In fig.1 six optical gain modules $13^1$, $13^2$..., $13^6$ are disposed along the optical fiber path 12, so that five fiber spans $14^1$, $14^2$..., $14^5$ may be identified. Typically, the gain modules are included in suitable amplification sites along the optical fiber path 12. For the purposes of the present invention, by "optical gain module" it has to be intended a unit comprising at least a device suitable for emitting a power and for providing such power to an optical amplifying medium connected to or included into the optical fiber path 12, in order to obtain a gain in said optical amplifying medium. The amplifying medium may be included or not in the optical gain module. In the former case, the optical gain module may be also called "lumped optical amplifier". In the latter case, the optical gain module comprises at least one pump device providing the pumping power radiation and one coupling device inserting said pumping radiation to a distributed amplifying medium, such as for example the transmission fiber included in the optical fiber path 12.

For example, an optical gain module suitable to be used in the system according to the present invention is an erbium doped fiber amplifier, comprising at least one pump source suitable for providing an optical pumping radiation, at least one erbium doped fiber and at least one coupler device suitable for coupling the pumping radiation and an optical signal to be amplified into the erbium doped fiber or fibers, e.g. a WDM coupler. Suitable pumping radiation may preferably have a wavelength in a range around 1480 nm or in a range around 980 nm.

Another exemplary optical gain module suitable to be used in the system according to the present invention is a semiconductor amplifier, comprising an electrical pump source suitable for providing electrical power and a semiconductor optical amplifying element comprising an electrode structure adapted for connection to the electrical pump source.

A further example of optical gain module suitable to be used in a system according to the present invention is a unit comprising at least one pump source adapted for providing an optical pumping radiation having a power and a wavelength suitable for causing distributed Raman amplification in at least a portion of the optical fiber path 12, and at least one coupler device suitable for coupling such pumping radiation into the optical fiber path 12, e.g. a WDM coupler. In order to have Raman amplification, the wavelength of the pumping radiation should be shifted with respect to the wavelength of the signal radiation in a lower wavelength region of the spectrum, such shift being equal to the Raman shift (see G.P. Agrawal, "Nonlinear Fiber Optics", Academic Press Inc. (1995), pag.317-319) of the material comprised in the core of the transmission fiber included in the optical fiber path 12. For typical silica/germania-based fibers the Raman shift is equal to about 13.2 THz. For signal wavelengths around 1550 nm, pumping radiation wavelengths suitable for Raman amplification may have a wavelength around 1450 nm. Preferably, the pumping radiation is coupled into the optical fiber path 12 in a direction opposite to the direction of the optical signal (counter-propagating Raman amplification).

A further example of optical gain module suitable to be used in a system according to the present invention is a lumped Raman amplifier, comprising at least one pump source adapted for providing an optical pumping radiation having a power and a wavelength suitable for causing Raman amplification in a piece of optical fiber especially adapted for obtaining high Raman amplification in a length of several km (Raman fiber), typically having a low effective area, included in the optical gain module, and at least one coupler device suitable for coupling such pumping radiation into the Raman fiber, e.g. a WDM coupler. As an example, a fiber suitable for a lumped Raman amplifier is disclosed in the article: T. Tsuzaki et al., *"Broadband Discrete Fiber Raman Amplifier with High Differential Gain Operating Over 1.65 $\mu$m-band"*, OFC2001, MA3-1.

A further example of optical gain module suitable to be used in a system according to the present invention is a unit comprising at least a first pump source adapted for providing a first optical pumping radiation having a power and a wavelength suitable for causing distributed Raman amplification in at least a portion of the optical fiber path 12 upstream from the optical gain module (counter-propagating Raman amplification), at least a first coupler device suitable for coupling such first pumping radiation into the optical fiber path 12, e.g. a first WDM coupler, at least a second pump source suitable for providing a second optical pumping radiation, at least one erbium doped fiber and at least a second coupler device suitable for coupling the second pumping radiation and an optical signal to be amplified into the erbium doped fiber, e.g. a second WDM coupler.

The amplification sites including the optical gain modules $13^1$, $13^2$...$13^M$ may also comprise further devices other than the gain modules themselves. For example, they may comprise a dispersion compensating device, such as for example a bobbin of dispersion compensating fiber having a chromatic dispersion of the opposite sign with respect to the fiber or fibers included in the spans $14^1$, $14^2$..., $14^N$, or a dispersion compensating grating.

N fiber spans $14^1$, $14^2$..., $14^N$ are identified between the transmitting station 11a and the receiving station 11 b as the portions of optical fiber path 12 lying between the M optical gain modules $13^1$, $13^2$...$13^M$. If the last optical gain module disposed along the optical fiber path 12 is disposed immediately upstream from the receiving station 11 b, for setting the power of the optical signal to a suitable level before the introduction in the receiving station 11 b, the number M of optical gain modules is higher than the number N of the spans by a unity (M=N+1). If a span of fiber is placed between the last optical gain module and the receiving station 11 b, it holds M=N. Preferably, the optical fiber path 12 comprises an odd number of fiber spans N.

Preferably, the length of each span is higher than or equal to 40 km, more preferably higher than or equal to 80 km. Lower span lengths may be provided, in particular, in long-haul systems, i.e. systems having an overall length exceeding several thousands of km, e.g. 10.000 km, in which the onset of nonlinear effects may sum up along the optical fiber path, until high levels. On the other hand, higher span lengths in excess of 80 km are desirable for systems having an overall length of no more than 2-3000 km, in which the onset of nonlinear effects may occur due to an increase of the overall optical power of the signal sent on the optical fiber path (for example due to an increase of the channels sent in a WDM system) and/or of the bit rate of the system.

Preferably, the optical gain modules $13^1...13^M$ are disposed substantially periodically along the optical fiber path 12, that is, the length of the fiber spans $14^1...14^N$ is substantially the same. Practically, this may correspond to a variation of the length of the spans in the system of at most 10%, preferably 5%, of the average length of the spans. More particularly, a lower variation may be desirable for systems having, for example, overall length in excess of 1500 km, and/or using a bit rate of 40 Gbit/s or more, and/or using a high number of channels.

An optical phase conjugation (OPC) device 15 is disposed along the optical fiber path 12. The OPC device 15 may be a device capable of inverting the spectrum of the channels transmitted along the line, i.e. a device for spectral inversion. Additionally, such device may modify the central wavelength of the inverted channels. Preferably, the OPC device 15 is a polarization-independent device. Preferably, it comprises a non-linear medium through which the optical channels and at least one linearly polarized pumping radiation pass twice, in one direction on the first pass and in the opposite direction on the second pass. On the second pass, the optical channels pass through the non-linear medium after undergoing a rotation of $\pi/2$ of their polarization state. The polarization state of the pumping radiation remains unchanged throughout the double pass. An example of a device of this type is described in the article by C.R. Giles, V. Mizrahi and T. Erdogan, *"Polarization-Independent Phase Conjugation in a Reflective Optical Mixer"*, IEEE Photonics Technology Letters, Vol. 7, No. 1, pp. 126-8 (1995). Typically, the OPC device 15 can comprise one or more devices for filtering the residual wavelengths of the non-linear wavelength conversion process. Additionally, the OPC device can comprise one or more devices for amplification of the phase conjugated channels or, in general, for total or partial compensation of the attenuation of the phase conjugator. Preferably, the wavelength conversion may be carried out so as to provide phase conjugated signals having a wavelength shifted of not more than 5 nm with respect to the wavelength of the signals inputted in the OPC device. In order to perform the phase conjugation of many different channels, a multi-channel OPC device of the type described in patent US 5,365,362 may be used. The position in which the OPC device is disposed along the optical fiber path 12 will be discussed in great detail in the following.

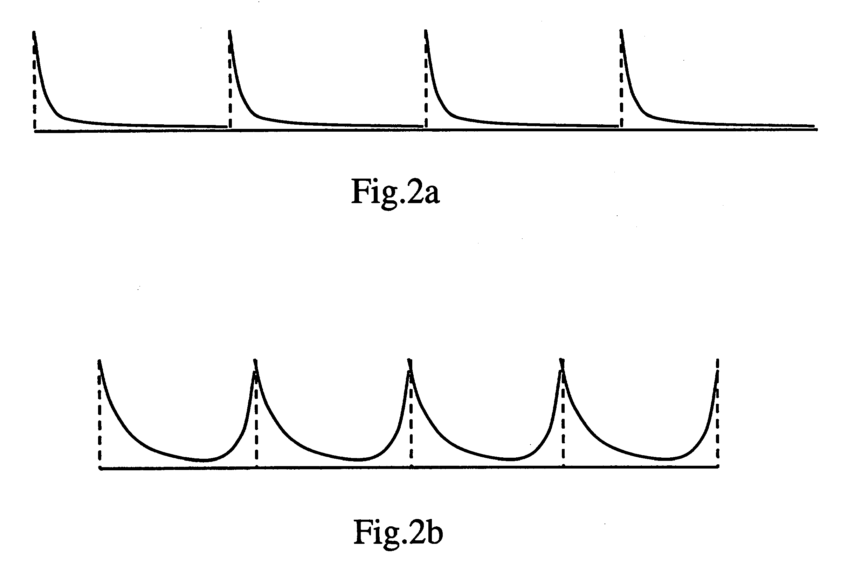

At the output of each optical gain module the power of the optical signal is increased to a level determined by the optical gain provided by the amplifying medium. Figs.2a and 2b schematically show two optical power profiles that can be obtained along a portion of the optical fiber path 12 of the system of fig.1, respectively with a chain of lumped amplifiers (e.g. EDFAs) and with a chain of optical gain modules for distributed counter-propagating Raman amplification: the position of the optical gain modules is shown by the dashed vertical lines. In particular, in fig.2a it is shown that the power increases abruptly in a very small length, corresponding to the overall length of the lumped amplifier (e.g. few meters for an EDFA, few millimeters or even less in a semiconductor amplifier, some km for a lumped Raman amplifier), and then diminishes progressively due to the attenuation introduced by the optical fiber included in the span downstream from the gain module, until the next optical gain module, in which the power increases abruptly another time, and so on. In fig.2b it is shown that the power increases progressively approaching the optical gain module due to counter-propagating Raman amplification, up to a maximum in correspondence of the position of the optical gain module, then diminishes progressively due to the attenuation introduced by the optical fiber included in the span downstream from the gain module in a first portion, then increases approaching the next optical gain module, and so on. A figure similar to fig.2b would be obtained considering a mixed counter-propagating Raman + EDFA amplification, in which the power value reached upstream from the optical gain module is lower than the maximum power, that is given by EDFA amplification. In any case, as schematically shown by figs.2a-2b the power profiles upstream and downstream from the optical gain modules are typically not symmetrical with respect to the optical gain modules. For example, the Applicant has determined that with counter-propagating Raman amplification in typical transmission fibers, the absolute value of the slope of the increase of the power level due to Raman amplification in the last portion of the spans may be typically three times the absolute value of the slope of the decrease of the power level due to fiber attenuation in the first portion of the spans.

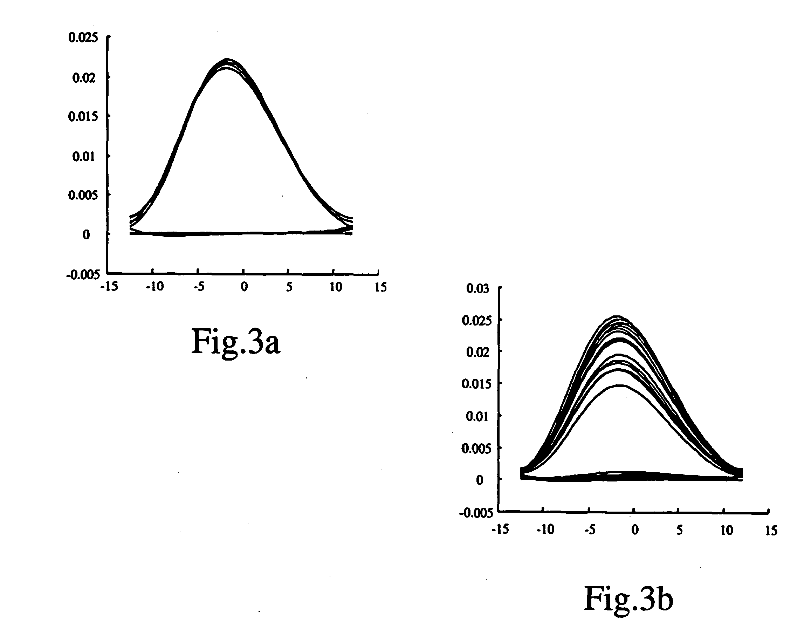

The maximum level of optical power along the optical fiber path, that is the height of the peaks in figs.2a-2b depends on many factors. Typically, it depends on the optical gain introduced by the optical gain modules: such optical gain may be for example regulated as a function of the overall length of the system, and/or of the span lengths, and/or of the number of the channels in a WDM system. A system having higher bit rate may reach higher power level along the optical fiber path with respect to a system having lower bit rate, as the available time slot for each bit of information is lower. Today there is a great interest in increasing the bit rate of optical systems from values of about 2.5 Gbit/s or 10 Gbit/s to higher values such as 40 Gbit/s or more. An increase of the bit rate may cause a corresponding increase of the impact of nonlinear effects, as the reached power levels along the line may be very high. As an example, figures 3a and 3b show the result of two simulations made by considering the launch of a single optical channel at 40 Gbit/s having an average power of 10 dBm in a system having a length of 400 km and with perfect compensation of chromatic dispersion. In fig.3a nonlinear effects were canceled by setting to zero the nonlinear coefficient of the fiber. In fig.3b a nonlinear coefficient of 1.3 1/(W·km) was introduced. As it can be seen, the eye opening is much lower in fig.3b, even in a system having a relatively low length, due to the onset of nonlinear effects. It has to be noticed that the value of 10 dBm of average power of the optical channel was chosen only for simulation purposes: it has to be intended that the invention applies also to systems using lower average power signals.

The minimum level of optical power along the spans also depends on many factors, among which the optical gain introduced by the gain modules, and/or the span length and/or the fiber attenuation. If counter-propagating Raman amplification is used, other characteristics of the transmission fiber may be of importance, such as the Raman gain coefficient and/or the effective area. The Applicant has found that if the power distribution along each span strongly varies, so that the minimum and the maximum power levels reached in each fiber span are very different from each other, then the asymmetry of the power distribution in the spans, visible in the schematic representations of figs.2a-2b, may cause distortion of an optical signal due to nonlinearity even if an OPC device is used. The Applicant has determined that this negative effect due to asymmetry may arise when the ratio between the minimum and the maximum optical power (measured in Watt) reached in the spans is lower than approximately $\frac{1}{e}$. The asymmetry may be evaluated by considering the behaviour of the optical power downstream and upstream from an optical gain module, or, equivalently, at the input and at the output of the spans.

More particularly, a measure of the asymmetry of the power distribution in the spans may be determined by finding the points of the optical spans in which the power level goes below $\frac{1}{e}$ of the maximum optical power. Typically, the maximum optical power is the power at the input of the spans, that is, just at the output of the gain module.

With sole lumped amplification, only one point is found for each span, in the input portion of the span. The following expression may be used in order to describe the optical power along the span:

$$P_s(z) = P_s(0) \cdot e^{-\alpha z} \qquad [8]$$

where $P_s(0)$ represents the optical power at the input of the span (that is, the maximum optical power) and a is the attenuation coefficient of the transmission fiber at the signal wavelength, expressed in Nepers/km in place of the more usual units dB/km: the attenuation in Nepers/km may be obtained by multiplying the attenuation expressed in dB/km by a factor $\log_e(10)/10$. By putting in formula [8] $P_s(z) = \frac{P_s(0)}{e}$, it may be seen that the point searched is $z = \frac{1}{\alpha}$. The distance of this point from the input of the span approximately corresponds to the effective length of the transmission fiber included in the span, that is

$$L_{eff} = \frac{1 - e^{-\alpha L_{amp}}}{\alpha} \qquad [9]$$

where $L_{amp}$ is the span length. The effective length calculated with formula [9] may be in fact approximated to:

$$L_{eff} = \frac{1}{\alpha} \qquad [9']$$

as the exponential value at the numerator of formula [9] is close to zero for typical values of attenuation and span length.

We define the "asymmetry length" $L_{asy}$, in case of sole use of lumped amplification, as:

$$L_{asy} = L_{eff} \qquad [10]$$

where $L_{eff}$ may be calculated with [9], or, more practically, with [9']. For typical fibers, having an attenuation coefficient of 0.2 dB/km, it holds $Le_{ff}$=21 km.

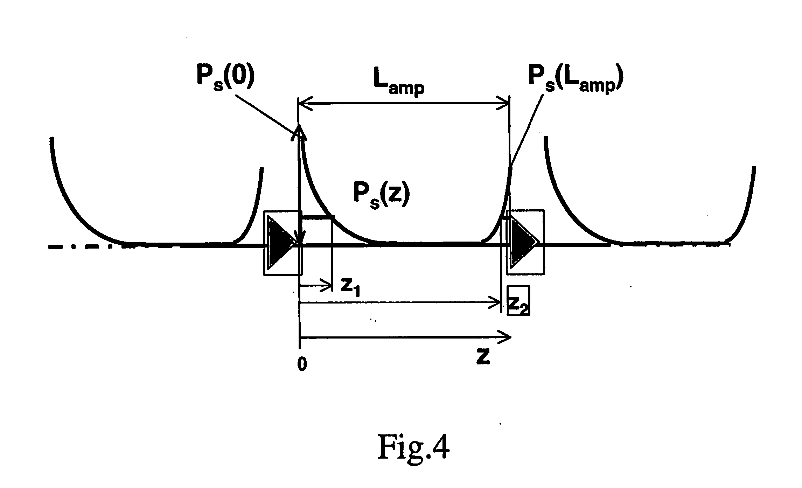

If distributed counter-propagating Raman amplification is used (in alternative or in combination with lumped amplification), the points of the optical spans in which the power level goes below $\dfrac{1}{e}$ of the maximum optical power may be two, as the power decreases in a first portion of the span due to fiber attenuation, and then increases in a last portion of the span due to Raman amplification (see fig.4). Let $z_1$ and $z_2$ be such two points. We define the asymmetry length in this case as:

$$L_{asy} = z_1 - (L_{amp} - z_2) \qquad [11]$$

where $L_{amp}$ is the average span length. The above definition for $L_{asy}$ is specific for each span. In practice, the average over all the spans can be considered as the asymmetric length $L_{asy}$ for the fiber path or for the optical system.

If sole counter-propagating Raman amplification is used, the power level at the output of the fiber span $P_s(L_{amp})$ is equal to the power level at the input of the fiber span $P_s(0)$. If counter-propagating Raman amplification is used in combination with lumped amplification, the power level at the output of the fiber span $P_s(L_{amp})$ is lower than the power level at the input of the fiber span $P_s(0)$, as lumped amplification introduces an amount of additional optical gain. The following expression may be used in order to describe the optical power along the span:

$$P_s(z) = P_s(0) \cdot e^{-\alpha_s z} \cdot \exp\left[ \frac{g_R \cdot P_P(L_{amp})}{\alpha_P \cdot A_{eff}} \cdot e^{-\alpha_P L_{amp}} \cdot \left(e^{\alpha_P z} - 1\right) \right] \qquad [12]$$

where $\alpha_s$ and $\alpha_P$ are the attenuation coefficients (in Nepers/km), respectively at the signal wavelength and at the Raman pump wavelength, $g_R$ is the Raman gain coefficient and $A_{eff}$ the effective area of the transmission fiber included in the span, whereas $P_P(L_{amp})$ is the Raman pump power introduced in the transmission fiber at the output end of the span.

$P_P(L_{amp})$ may be calculated by evaluating formula [12] at the output of the span (that is, by putting $P_s(z) = P_s(L_{amp})$) and solving with respect to $P_P(L_{amp})$, so that:

$$P_P(L_{amp}) = \frac{\alpha_P \cdot A_{eff}}{g_R \cdot \left(1 - e^{-\alpha_P L_{amp}}\right)} \cdot \ln\left( \frac{P_S(L_{amp})}{P_S(0)} \cdot e^{\alpha_s L_{amp}} \right) \qquad [13]$$

Formula [13] may be substituted into formula [12] so as to obtain:

$$P_s(z) = P_s(0) \cdot e^{-\alpha_s z} \cdot \exp\left[ \frac{1}{\left(1 - e^{-\alpha_P L_{amp}}\right)} \cdot \ln\left( \frac{P_S(L_{amp})}{P_S(0)} \cdot e^{\alpha_s L_{amp}} \right) \cdot e^{-\alpha_P L_{amp}} \cdot \left(e^{\alpha_P z} - 1\right) \right] \qquad [14]$$

Thus, in order to find the points $z_1$, $z_2$ of the optical spans in which the power level goes below $\dfrac{1}{e}$ of the maximum optical power $P_s(0)$, the following equation should be solved:

$$P_s(0) \cdot e^{-\alpha_s z} \cdot \exp\left[\frac{1}{\left(1-e^{-\alpha_P L_{amp}}\right)} \cdot \ln\left(K \cdot e^{\alpha_s L_{amp}}\right) \cdot e^{-\alpha_P L_{amp}} \cdot \left(e^{\alpha_P z} - 1\right)\right] = \frac{1}{e} \cdot P_s(0) \quad [15]$$

where $K$ is the ratio between $P_s(L_{amp})$ and $P_s(0)$ (expressed in Watt). Equation [15] may be numerically solved in order to find the solutions $z_1$ and $z_2$.

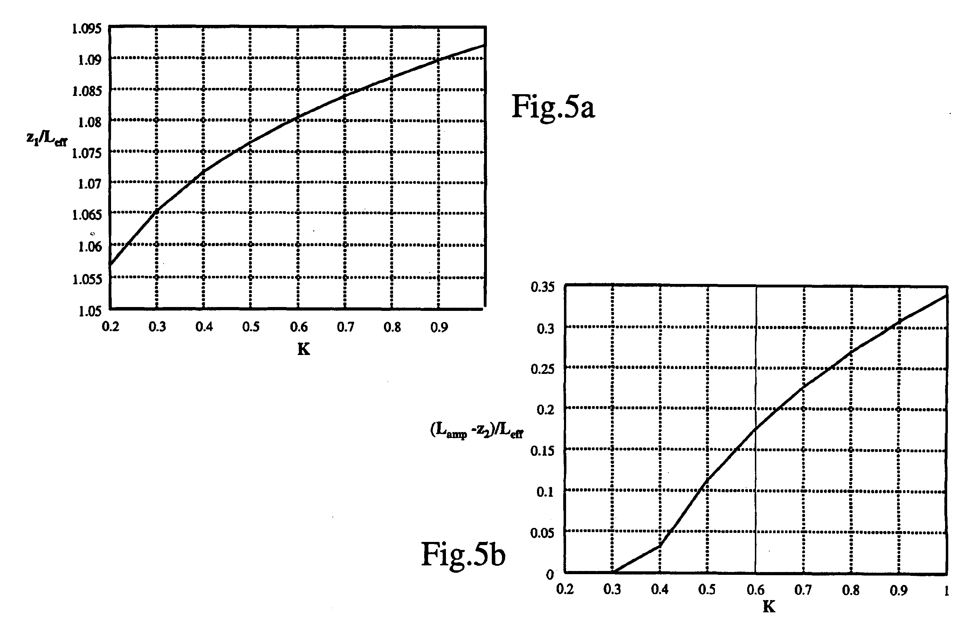

It may be convenient to express $z_1$ and $(L_{amp} - z_2)$ as multiple values of the approximated effective length $L_{eff}=1/\alpha_s$. Fig.5a and fig.5b show, respectively, the variation of $z_1$ and $(L_{amp} - z_2)$ versus the $K$ parameter, for an amplifier spacing $L_{amp}$ of 100 km and $\alpha_s=\alpha_P=0.2$dB/km, both $z_1$ and $(L_{amp} - z_2)$ being expressed as multiple of $L_{eff}=1/\alpha_s$. As it can be seen in fig.5a, the value of $z_1$ is always approximately equal to $L_{eff}$ for any value of the $K$ parameter (variation between 1.055 and 1.095 times $L_{eff}$). As it can be seen in fig.5b, the value of $(L_{amp} - z_2)$ varies versus the $K$ parameter: for example, when sole counter-propagating Raman amplification is used ($K$=1), it holds

$$L_{amp} - z_2 \cong 0.33 L_{eff} \cong \frac{1}{3} L_{eff}$$

so that, in such case, the asymmetric length calculated with formula [11] becomes:

$$L_{asy} = z_1 - (L_{amp} - z_2) \cong L_{eff} - \frac{1}{3} L_{eff} = \frac{2}{3} L_{eff} \quad [11']$$

As it can be seen, the introduction of the counter-propagating amplification diminishes the value of the asymmetric length: this corresponds to a symmetrization of the power distribution with respect to the use of sole lumped amplification, as expected. However, such symmetrization is not complete, so that the asymmetric length is still different from zero.

If lumped amplification and counter-propagating distributed Raman amplification are both used, the asymmetric length may become more similar to $L_{eff}$. In fact, by considering for example $K$=0.5, it holds (see fig.5b):

$$L_{asy} = z_1 - (L_{amp} - z_2) \cong L_{eff} - 0.11 L_{eff} \cong L_{eff} - \frac{1}{9} L_{eff} = \frac{8}{9} L_{eff}$$

that is, practically, $L_{asy} \cong L_{eff}$. This means that if counter-propagating distributed Raman amplification is used only for slightly increasing the optical power at the end of each span before lumped amplification (as, for example, it is typical for increasing the span length, or for managing the power budget along the line), the effective length of the transmission fiber may be still used as asymmetric length.

Equation [15] may be solved graphically. By putting, for simplicity, $\alpha=\alpha_s=\alpha_p$ (for a standard SMF fiber it holds $\alpha_s =0.046$ Neper/km @ 1550nm, $\alpha_P =0.064$ Neper/km @ 1450nm), equation [15] may be written as

$$e^{-\alpha z} \cdot \exp\left[C \cdot \left(e^{\alpha z} - 1\right)\right] = e^{-1} \quad [16]$$

wherein

$$C = \frac{1}{\left(1 - e^{-\alpha L_{amp}}\right)} \cdot \ln\left(K \cdot e^{\alpha L_{amp}}\right) \cdot e^{-\alpha L_{amp}}$$

By setting

$$y_1 = e^{\alpha z}$$

$$y_2 = \frac{\alpha}{C} \cdot z + 1 - \frac{1}{C}$$

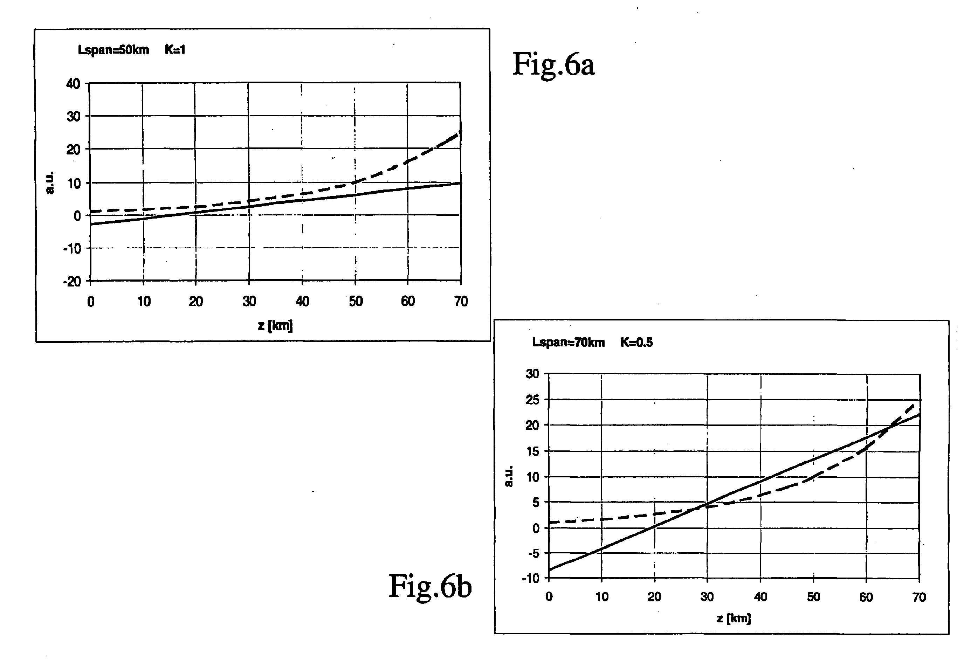

the solutions to equation [16], that is, the point $z_1$ and $z_2$, may be found as the abscissa of the intersections between the functions $y_1(z)$ and $y_2(z)$, which may depend on the chosen values of $L_{amp}$ and $K$. In particular, when the span length $L_{amp}$ becomes lower than about 50-60 km, the use of counter-propagating Raman amplification may cause the optical power level to stay always over $\dfrac{P_s(0)}{e}$ along the whole span: in such case the asymmetric length cannot be calculated. However, this would be substantially similar to a "lossless" system. For example, fig.6a shows the plots of the two functions $y_1(z)$ (dashed line) and $y_2(z)$ (continuous line) versus z for $K=1$ and $L_{amp}=50$ km. As it can be seen, the two functions never intersect with each other, so that no solution can be found to equation [16]. On the contrary, fig.6b shows the plots of the two functions $y_1(z)$ (dashed line) and $y_2(z)$ (continuous line) versus z for K=0.5 and $L_{amp}=70$ km: as it can be seen, two intersections can still be found ($z_1 \cong 27$ km, $z_2 \cong 65$ km), leading to $L_{asy} \cong 22$ km. A plot similar to fig.6b (not shown) would be obtained for K=1 and $L_{amp}=70$ km, with intersections at $z_1 \cong 30$ km, $z_2 \cong 55$ km, leading to $L_{asy} \cong 15$ km.

The Applicant has found that the positioning of the OPC device 15 at a distance from the output of an optical gain module around a half of the asymmetric length $L_{asy}$, calculated according to what stated above, may greatly reduce the negative effect of the asymmetry of the power distribution. The OPC 15 is disposed in a portion of the span downstream from the optical gain module where the optical signal has a high power level. The positioning of the OPC device 15 according to the invention allows to reduce the effects of nonlinearity with respect to the positioning of the same OPC device 15 in other places along the span, for example just at the output of the same optical gain module. More particularly, the Applicant has found that if the OPC device 15 is placed at a distance comprised between $0.1 \cdot L_{asy}$ and $0.7 \cdot L_{asy}$ downstream from the output of an optical gain module, the negative effect of the nonlinearity may be greatly reduced. This means roughly a range comprised between 2 km to 14 km from the output of the optical gain module, in case lumped amplification is used, for transmission over typical fibers. Preferably, the distance of the OPC device from the output of the optical gain module may be higher than $0.2 \cdot L_{asy}$, more preferably higher than $0.3 \cdot L_{asy}$. Preferably, the distance of the OPC device from the output of the optical gain module may be lower than $0.65 \cdot L_{asy}$, more preferably lower than $0.6 \cdot L_{asy}$.

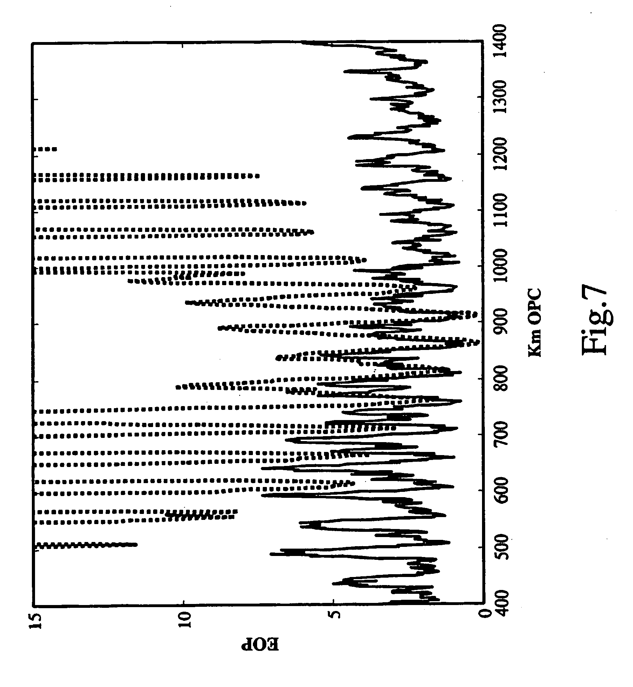

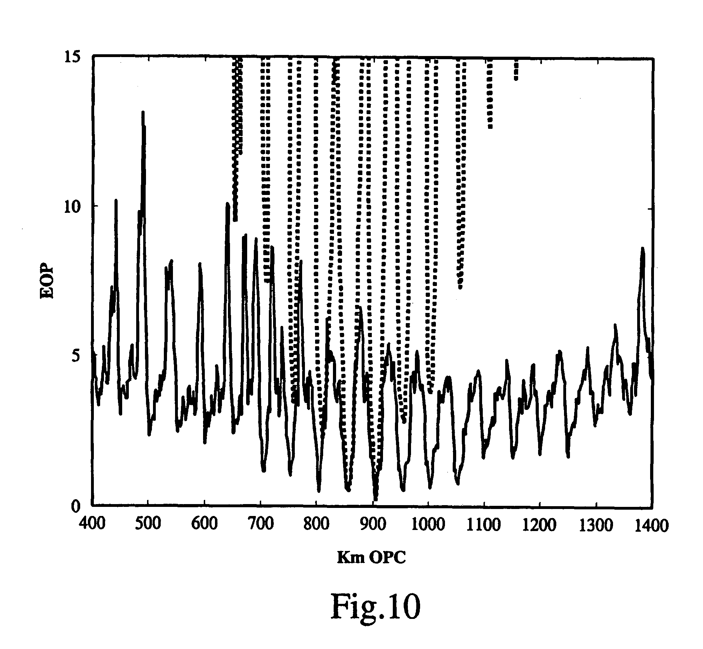

Preferably, the OPC device may be disposed downstream from the mid-span optical gain module. If the optical system has N spans between its input and its output, the mid-span optical gain module is the [N/2+1]th (to be understood as the integer part of N/2+1) optical gain module, starting the counting of the optical gain modules from the input of the optical fiber path. This particular positioning is preferred in that it allows, at the same time, to reduce in a very effective manner the effects of nonlinearities and to compensate chromatic dispersion to a great extent. The residual chromatic dispersion may be compensated separately, for example at the end of the optical fiber path. Further, the reduction of the effects of nonlinearities may be very effective with a positioning near the mid-span, as in this case the high-power regions will be disposed symmetrically with respect to the OPC. However, as it will be shown with reference to figures 7 and 10, this requisite of symmetry may be not so stringent.

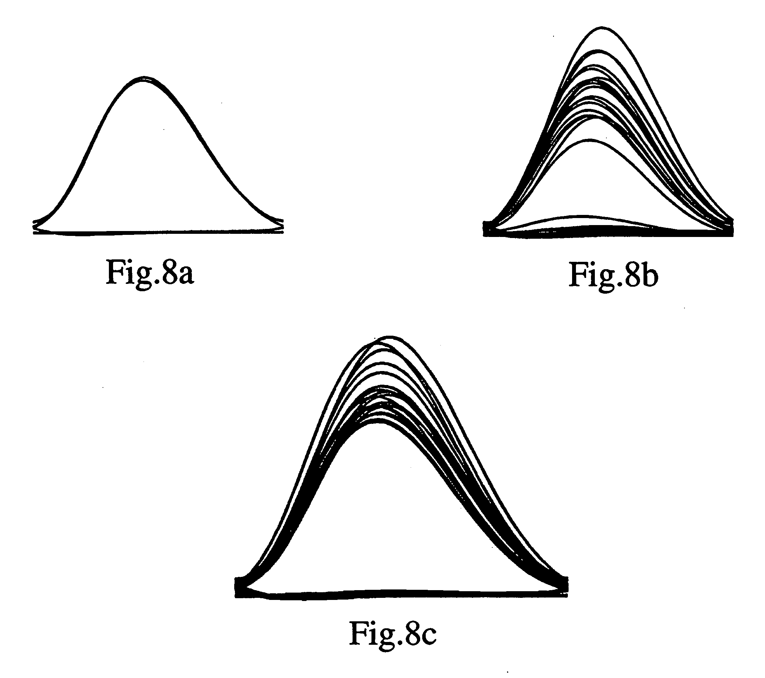

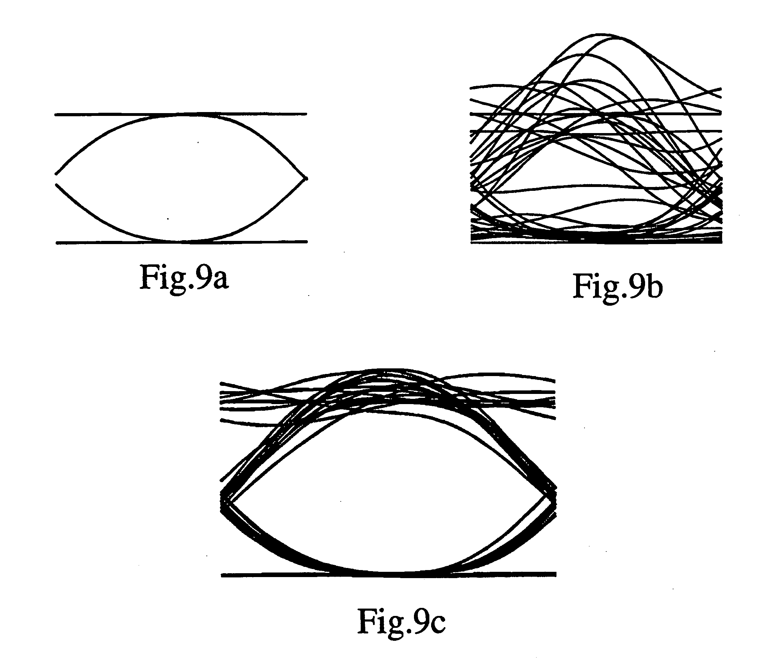

Fig.7 shows the result of a first simulation performed by the Applicant. In this first simulation, propagation of RZ and NRZ pulses was investigated for a system comprising eighteen EDFAs, spaced 100 km from each other. All the spans between EDFAs included the same transmission fiber. The bit rate of the system was 40 Gbit/s and the average power of the pulses of 10 dBm. A word having a PRBS of $2^5$ was generated. The group velocity dispersion (GVD) of the transmission fiber used in the simulation for RZ transmission was set to -20 $ps^2$/km, roughly corresponding to the GVD of a SMF fiber. The nonlinear coefficient used for the simulation was 1.3 $(W \cdot km)^{-1}$. The attenuation of the fiber was set to 0.2 dB/km. RZ pulses had a gaussian shape and a full-width-half-maximum duration $T_{FWHM}$ of 5 ps. The group velocity dispersion (GVD) of the transmission fiber used in the simulation for NRZ transmission was set to +5 ps$^2$/km. NRZ pulses had a 0.25 rise time in a time slot of 25 ps. The system included an ideal OPC device, that is an OPC device that performed only phase conjugation on the pulses, with no change in central wavelength and in power of the conjugated pulses. The positioning of the OPC device was varied continuously along the system, each time evaluating the eye opening penalty (EOP) at the end of the system. The residual chromatic dispersion not already compensated by the OPC device was supposed to be completely compensated at the end of the system. The graph of fig.7 shows the EOP versus the OPC positioning along such system, the scale of the OPC positioning ranging from 400 km and 1400 km, that is around the mid-span point (900 km) of the optical line: the dotted line shows the result for NRZ pulses; the continuous line shows the result for RZ pulses. As it can be seen, a series of deep minima and maxima of EOP alternate: in particular, the minima occur in well defined positions disposed: a) downstream from the middle of the spans; b) downstream and at a certain distance from the position of the optical gain modules (that is, downstream from every hundred km). Minima downstream from the middle of the spans are disadvantageous as they are too far from the optical gain modules, so that a dedicated site should be added in the optical line for the positioning of the OPC. Minima downstream from the gain modules are much more advantageous. As it can be seen, their position is located at a relatively short distance (about 10 km, that is, about $L_{asy}/2$) from the position of the optical gain modules. In a preferred region near the mid-span point (900 km), the EOP may reach values well below 1 dB. The minima for NRZ pulses are deeper than the minima for RZ pulses. On the other hand, the minima for the RZ pulses keep lower values of EOP in a wider range of OPC positioning. It's interesting to notice that the EOP is much higher in correspondence of the position of the optical gain module with respect to the EOP of the closest minimum (by at least 1 dB for RZ pulses, even 5 dB or more for NRZ pulses). For example, figures 8a-b-c respectively show a RZ pulse at the input of the system, the RZ pulse at the output of the system in which the OPC is disposed at 900 km (that is, at the output of the 9th optical gain module), the RZ pulse at the output of the system in which the OPC is disposed at 910 km (that is, 10 km far away from the output of the 9th optical gain module). As it can be seen, a better eye opening is shown in fig.8c with respect to fig. 8b. An even better result is shown in figs.9a-b-c, that show respectively a NRZ pulse at the input of the system, the NRZ pulse at the output of the system in which the OPC is disposed at 900 km (that is, at the output of the 9th optical gain module), the NRZ pulse at the output of the system in which the OPC is disposed at 910 km (that is, 10 km far away from the output of the 9th optical gain module). As it can be seen, in fig.9b the eye is practically closed, so that the information carried by the pulse is completely lost; on the contrary, fig.9c shows a very good eye opening.

In a second simulation, propagation of RZ and NRZ pulses was investigated for a system comprising eighteen optical gain modules comprising, instead of EDFAs, Raman pump lasers generating pump radiation counter-propagating with respect to the optical signal. The optical gain modules were spaced 100 km with each other. The other simulation parameters were the same of the example explained with reference to fig.7. Fig.10 shows the result of the simulation (NRZ dotted line, RZ continuous line) Also in this case, alternating maxima and minima of EOP are shown, with minima even deeper than in fig.7. Further, the minima downstream from and close to the optical gain modules are closer to the optical gain modules than in fig.7, in accordance with formula [11']. As it can be seen, with counter-propagating Raman amplification the EOP becomes rapidly higher if the positioning of the OPC is made in a span away from the mid-span point of 900 km.

As said above, the positioning of the OPC device near the mid-span point may be advantageous in order to compensate chromatic dispersion and make the high power regions symmetrical with respect to the OPC. However, as it can be seen both in fig.7 and fig. 10, the requisite of disposing the OPC device in the middle of the optical fiber path, in order to make the high-power regions symmetrical with respect to the OPC device, is not stringent. In particular, for RZ pulses it can be seen that acceptable EOP below about 1 dB may be obtained in a portion of optical fiber path comprising at least two optical gain modules away from the mid-span gain module. By relaxing the acceptability condition on the EOP, even more OPC device positionings can be used. On the other hand, NRZ format has more stringent requirements, as EOP worsens rapidly away from the mid-span point. However, error correction techniques (such as forward error correction, or FEC, for example) may be of help in improving EOP if positioning the OPC device close to the mid-span is not convenient for practical installation reasons. Preferably, the OPC device should be positioned downstream from an optical gain module disposed within a mid-span portion of the optical fiber path of $\pm L/5$, preferably $\pm L/6$, around the mid-span point of the optical fiber path, wherein L is the overall length of the optical fiber path. Anyway, it has to considered that if the positioning of the OPC device is made away from the mid-span optical gain module, then a substantial amount of chromatic dispersion not compensated by the OPC device needs to be compensated. This may be done once at the end of the optical fiber path, preferably with one or more compensating gratings, or more gradually along the optical fiber path with suitable compensating devices, for example combined with at least some optical gain modules.

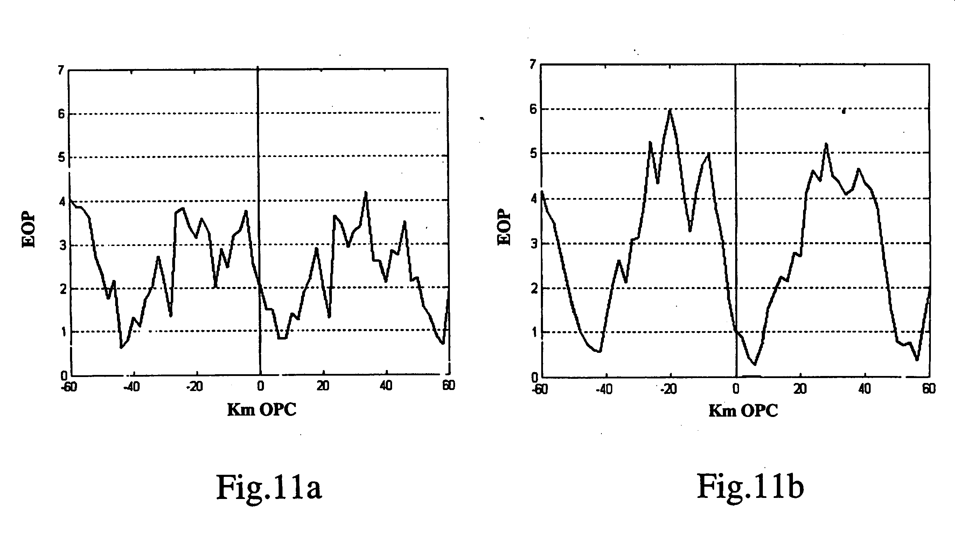

Figures 11 a and 11b show the EOP versus the OPC positioning near one of the gain modules. For these simulations, three RZ channels each having an average power of 10 dBm were considered. The rest of the parameters of the system considered were the same of those explained with reference to fig.7. In both graphs, the optical gain module is at the "0" position: a vertical line has been added in order to compare the EOP value at the "0" position and at the closer minimum. The plotted EOP is the worst among the three EOPs of the three channels. Fig.11a shows the EOP obtained in a system comprising EDFAs, while fig.11 b shows the EOP obtained in a system comprising counter-propagating Raman amplification. As it can be seen from fig.11 a, an EOP value lower by more than 1 dB may be obtained by positioning the OPC device according to the invention, while in fig.11 b the improvement is more than 0.5 dB, together with a very low EOP value at the minimum. This confirms that the use of counter-propagating Raman amplification is advantageous for a system comprising an OPC. However, fig.11 b also shows that the use of counter-propagating Raman amplification makes the system less tolerant with respect to a wrong positioning of the OPC device, as the maximum EOP values reached are higher than the maximum reached in fig.11 a.

As said above, the simulations were carried out by considering an ideal OPC device, that is, a device performing only phase conjugation on the propagating signal. Typically, an OPC device also performs a wavelength conversion on the propagating signal. Preferably, the wavelength conversion process should be carried out so as to provide phase conjugated signal having wavelength shifted of not more than 5 nm with respect to the wavelength of the signal inputted in the OPC device.

The system according to the invention has been described with reference to an optical fiber path included between a transmitting station and a receiving station. This has not to be considered as limiting the invention, as an optical line including an optical fiber path according to what stated above may be disposed in a more complex network between any two nodes the network itself, for example two nodes of an optical network not having transmitting and/or receiving function, but only routing function.

The system or the optical line according to the invention may be implemented *ex-novo,* by connecting at least the various components described with reference to fig.1 and preferably providing that the first portion of the span including the OPC device 15 (between the output of the immediately downstream gain module and the OPC device) and the OPC device 15 be included in the downstream amplification site. Less preferably, the OPC device 15 may be included in a separated site.

The system or the optical line according to the invention may further be an upgrade of an already installed system. In such case, it may be possible to provide an additional piece of transmission fiber having a length between $0.1 \cdot L_{asy}$ and $0.7 \cdot L_{asy}$, according to the invention, between the input of the OPC device and the output of the immediately upstream optical gain module, so as to include both the additional piece of fiber and the OPC device itself in the same amplification site of the optical gain module. Less preferably, the OPC device 15 may be included in a separated site, at the specified distance from the output of the optical gain module.

**Claims**

1. An optical system (10) comprising:

   - an optical fiber path (12) suitable for propagating an optical signal at least in a first direction;
   - a plurality M of optical gain modules ($13^1...13^6$) disposed along said optical fiber path (12), so as to divide said optical fiber path in N spans of optical fiber ($14^1...14^5$) having an average length $L_{amp}$ and comprising at least one transmission optical fiber having an attenuation $\alpha$, and
   - an optical phase conjugation device (15) disposed at a predetermined position along said optical fiber path (12),
   - said optical signal having an asymmetric power distribution along said spans, so as to define an asymmetric length $L_{asy}$,

   **characterized in that**

   - said predetermined position is at a distance comprised between $0.1 \cdot L_{asy}$ and $0.7 \cdot L_{asy}$ downstream from the output of one of said optical gain modules.

2. An optical system according to claim 1, **characterized in that** said one optical gain module is the $[N/2+1]^{th}$ gain module of said plurality of gain modules.

3. An optical system according to claim 1 or 2, **characterized in that** said optical fiber path comprises an odd number of spans ($14^1...14^5$).

4. An optical system according to any one of the preceding claims, **characterized in that** said position is disposed at a distance greater than or equal to $0.2 \cdot L_{asy}$ from the output of said one gain module.

5. An optical system according to any one of the preceding claims, **characterized in that** said position is disposed at a distance shorter than or equal to 0.65. $L_{asy}$ from the output of said one gain module.

6. An optical system according to any one of the preceding claims, **characterized in that** said optical gain modules ($13^1...13^6$) comprise erbium-doped fiber amplifiers.

7. An optical system according to any one of the preceding claims, **characterized in that** said optical gain modules ($13^1...13^6$) comprise pump devices adapted for inserting in said optical fiber path a pumping radiation suitable for causing Raman amplification of said optical signal in at least portions of said optical fiber path (12).

8. An optical system according to claim 7, **characterized in that** said pump devices are adapted for inserting in said optical fiber path (12) said pumping radiation in a second direction, opposite to said first direction.

9. An optical system according to any one of the preceding claims comprising a transmitting station (11a), a receiving station (11b), said transmitting station (11a) being connected at an input end and said receiving station (11 b) being connected to an output end of said optical fiber path (12).

10. A method for assembling an optical system comprising the steps of:

   - providing a plurality M of optical gain modules ($13^1....13^6$) adapted for amplifying an optical signal;
   - connecting said plurality of optical gain modules ($13^1....13^6$) by N spans of optical fiber ($14^1....14^5$) so as to form an optical fiber path (12), said spans of optical fiber ($14^1....14^5$) having an average length $L_{amp}$ and comprising at least one transmission optical fiber having an attenuation $\alpha$;
   - disposing a phase conjugation device (15) along said optical fiber path (12);
   - said plurality of optical gain modules ($13^1....13^6$), said average length $L_{amp}$ and said attenuation $\alpha$ being suitable for obtaining an asymmetric power distribution of said optical signal along said spans **characterized by** an asymmetric length $L_{asy}$;

   said method being **characterized in that**

   - the disposition of said phase conjugation device (15) is performed at a distance comprised between $0.1 \cdot L_{asy}$ and $0.7 \cdot L_{asy}$ downstream from the output of one of said optical gain modules.

11. A method of operating of an optical transmission system comprising an optical fiber path (12), comprising at least one transmission optical fiber having an attenuation a and a plurality of optical gain modules ($13^1....13^6$) disposed along said optical fiber path (12) so as to define a plurality of spans ($14^1....14^5$) having an average length $L_{amp}$, said method comprising:

   - inserting an optical signal at an input end of said optical fiber path (12);
   - amplifying said optical signal along said spans, so as to obtain an asymmetric power distribution of said optical signal along said spans **characterized by** an asymmetric length $L_{asy}$;
   - phase-conjugating said optical signal along said optical fiber path (12);

   **characterized in that**

   - said step of phase-conjugating is performed at a position along said optical fiber path (12) being at a distance comprised between $0.1 \cdot L_{asy}$ and $0.7 \cdot L_{asy}$ downstream from the output of one of said optical gain modules.

12. A method of upgrading an optical transmission system comprising an optical fiber path (12), the optical fiber path including at least one transmission optical fiber having an attenuation $\alpha$ and a plurality of optical gain modules ($13^1.... 13^6$) disposed along said transmission optical fiber (14) so as to define a plurality of spans ($14^1....14^5$) having an average length $L_{amp}$, said plurality of optical gain modules ($13^1....13^6$), said average length $L_{amp}$ and said attenuation $\alpha$ being suitable for obtaining an asymmetric power distribution of an optical signal propagating along said spans **characterized by** an asymmetric length $L_{asy}$;, said method comprising:

   - disposing a phase conjugation device (15) along said optical fiber path (12) at a distance comprised between $0.1 \cdot L_{asy}$ and $0.7 \cdot L_{asy}$ downstream from the output of one of said optical gain modules.

**Patentansprüche**

1. Optisches System (10), umfassend.

   - einen faseroptischen Weg (12), der zur Ausbreitung eines optischen Signals mindestens in eine erste Richtung geeignet ist;
   - eine Vielzahl M von optischen Verstärkermodulen ($13^1...13^6$) die entlang des faseroptischen Wegs (12) angeordnet sind, um so den faseroptischen Weg in N Spannen optischer Fasern ($14^1...14^6$) zu unterteilen, die eine durchschnittliche Länge $L_{amp}$ besitzen und mindestens eine optische Übertragungsfaser mit einer Abschwächung $\alpha$ umfassen, und
   - eine optischer Phasenkonjugationsvorrichtung (15), die an einer vorbestimmten Position entlang des faseroptischen Wegs (12) angeordnet ist,
   - wobei das optische Signal eine asymmetrische Leistungsverteilung entlang der Spannen aufweist, um so eine asymmetrische Länge $L_{asy}$ zu definieren,

   **dadurch gekennzeichnet, dass**

   - die vorbestimmte Position sich an einem Abstand zwischen $0,1*L_{asy}$ und $0,7 L_{asy}$ stromabwärts vom Ausgang eines der optischen Verstärkermodule befindet.

2. Optisches System nach Anspruch 1, **dadurch gekennzeichnet, dass** das eine optische Verstärkermodul das [N/2+1]-te Verstärkermodul der Vielzahl von Verstärkermodulen ist.

3. Optisches System nach Anspruch 1 oder 2, **dadurch gekennzeichnet, dass** der faseroptische Weg eine ungerade Anzahl von Spannen ($14^1...14^5$) umfasst.

4. Optisches System nach einem der vorangehenden Ansprüche, **dadurch gekennzeichnet, dass** die Position an einem Abstand größer oder gleich $0,2 *L_{asy}$ vom Ausgang des einen Verstärkermoduls angeordnet ist.

5. Optisches System nach einem der vorangehenden Ansprüche, **dadurch gekennzeichnet, dass** die Position an einem Abstand kleiner oder gleich $0,65*L_{asy}$ vom Ausgang des einen Verstärkermoduls angeordnet ist.

6. Optisches System nach einem der vorangehenden Ansprüche, **dadurch gekennzeichnet, dass** die optischen Verstärkermodule ($13^1...13^6$) Erbium-dotierte Faserverstärker umfassen.

7. Optisches System nach einem der vorangehenden Ansprüche, **dadurch gekennzeichnet, dass** die optischen Verstärkermodule ($13_1...13_6$) Pumpvorrichtungen umfassen, die dazu geeignet sind, in den faseroptischen Weg eine Pumpstrahlung einzuspeisen, welche geeignet ist, eine Raman-Verstärkung des optischen Signals zumindest in Abschnitten des faseroptischen Wegs (12) zu bewirken.

8. Optisches System nach Anspruch 7, **dadurch gekennzeichnet, dass** die Pumpvorrichtungen geeignet sind, um in den faseroptischen Weg (12) die Pumpstrahlung in einer der ersten Richtung entgegengesetzten zweiten Richtung einzuspeisen.

9. Optisches System nach einem der vorangehenden Ansprüche, umfassend eine Übertragungsstation (11a) und eine Empfangsstation (11b), wobei die Übertragungsstation (11a) an einem Eingangsende des faseroptischen Wegs (12) angeschlossen ist und die Empfangsstation (11b) an einem Ausgangsende des faseroptischen Wegs (12) angeschlossen ist.

10. Verfahren zum Aufbau eines optischen Systems, umfassend die folgenden Schritte:

    - Bereitstellen einer Vielzahl M von optischen Verstärkermodulen ($13^1...13^6$), die zum Verstärken eines optischen Signals geeignet sind;
    - Verbinden der Vielzahl von optischen Verstärkermodulen ($13^1...13^6$) durch N Spannen optischer Faser ($14^1...14^5$), um so einen faseroptischen Weg (12) zu bilden, wobei die Spannen an optischer Faser ($14^1...14^5$) eine Durchschnittslänge $L_{amp}$ aufweisen und mindestens eine optische Übertragungsfaser mit einer Abschwächung $\alpha$ umfassen.
    - Anordnen einer Phasenkonjugationsvorrichtung (15) entlang des faseroptischen Wegs (12);

- wobei die Vielzahl der optischen Verstärkermodule ($13^1...13^6$), die durchschnittliche Länge $L_{amp}$ und die Abschwächung geeignet sind, um eine asymmetrische Leistungsverteilung des optischen Signals entlang der Spannen zu erhalten, die durch eine asymmetrische Länge $L_{asy}$ **gekennzeichnet** ist;

wobei das Verfahren **dadurch gekennzeichnet ist, dass**

- die Anordnung der Phasenkonjugationsvorrichtung (15) an einem Abstand zwischen $0,1*L_{asy}$, und $0,7*L_{asy}$ stromabwärts vom Ausgang eines der optischen Verstärkermodule durchgeführt wird.

**11.** Verfahren zum Betreiben eines optischen Übertragungssystems mit einem faseroptischen Weg (12), der mindestens eine optische Übertragungsfaser mit einer Abschwächung $\alpha$ und eine Vielzahl optischer Verstärkermodule ($13^1...13^6$) umfasst, die entlang des faseroptischen Wegs (12) angeordnet sind, um so eine Vielzahl von Spannen ($14^1...14^5$) mit einer durchschnittlichen Länge $L_{amp}$ zu definieren, wobei das Verfahren umfasst:

- Einspeisen eines optischen Signals an einem Eingangsende des faseroptischen Wegs (12);
- Verstärken des optischen Signals entlang der Spannen, um so eine asymmetrische Leistungsverteilung des optischen Signals entlang der Spannen zu erhalten, **gekennzeichnet durch** eine asymmetrische Länge $L_{asy}$;
- Phasenkonjugieren des optischen Signals entlang des faseroptischen Wegs (12);

**dadurch gekennzeichnet, dass**

- der Schritt des Phasenkonjugierens an einer Position entlang des faseroptischen Wegs (12) durchgeführt wird, die sich an einem Abstand zwischen $0,1*L_{asy}$ und $0,7*L_{asy}$ stromabwärts vom Ausgang eines der optischen Verstärkermodule befindet.

**12.** Verfahren zum Verbessern eines optischen Übertragungssystems mit einem faseroptischen Weg (12), wobei der faseroptische Weg mindestens eine optische Übertragungsfaser mit einer Abschwächung $\alpha$ und eine Vielzahl von optischen Verstärkermodulen ($13^1...13^6$) umfasst, die entlang der optischen Übertragungsfaser (14) angeordnet sind, um so eine Vielzahl von Spannen ($14^1...14^5$) mit einer Durchschnittslänge $L_{amp}$ zu definieren, wobei die Veilzahl von optischen Verstärkermodulen ($13^1...13^6$) , die Durchschnittslänge $L_{amp}$ und die Abschwächung $\alpha$ geeignet sind, um eine asymmetrische Leistungsverteilung eines sich entlang der Spannen ausbreitenden optischen Signals zu erhalten, wobei die Spannen durch eine asymmetrische Länge $L_{asy}$ **gekennzeichnet** sind; wobei das Verfahren umfasst:

- Anordnen einer Phasenkonjugationsvorrichtung (15) entlang des faseroptischen Wegs (12) an einem Abstand zwischen $0,1*L_{asy}$ und $0,7*L_{asy}$ stromabwärts vom Ausgang eines der optischen Verstärkermodule.

**Revendications**

**1.** Système optique (10) comprenant :

- un chemin de fibre optique (12) approprié pour propager un signal optique au moins dans un premier sens ;
- une pluralité M de modules de gain optique ($13^1...13^6$) disposés le long dudit chemin de fibre optique (12), afin de diviser ledit chemin de fibre optique en N portions de fibre optique ($14^1...14^5$) ayant une longueur moyenne $L_{amp}$ et comprenant au moins une fibre optique de transmission ayant une atténuation $\alpha$, et
- un dispositif de conjugaison de phase optique (15) disposé en une position prédéterminée sur ledit chemin de fibre optique (12),
- ledit signal optique ayant une distribution de puissance asymétrique le long desdites portions, afin de définir une longueur asymétrique $L_{asy}$,

**caractérisé en ce que**

- ladite position prédéterminée se trouve à une distance comprise entre $0,1 \cdot L_{asy}$ et $0,7 \cdot L_{asy}$ en aval de la sortie de l'un desdits modules de gain optique.

**2.** Système optique selon la revendication 1, **caractérisé en ce que** ledit un module de gain optique est le $[N/2+1]^e$ module de gain de ladite pluralité de modules de gain.

**3.** Système optique selon la revendication 1 ou 2, **caractérisé en ce que** ledit chemin de fibre optique comprend un nombre impair de portions ($14^1$...$14^5$).

**4.** Système optique selon l'une quelconque des revendications précédentes, **caractérisé en ce que** ladite position est disposée à une distance supérieure ou égale à $0,2 \cdot L_{asy}$ de la sortie dudit un module de gain.

**5.** Système optique selon l'une quelconque des revendications précédentes, **caractérisé en ce que** ladite position est disposée à une distance inférieure ou égale à $0,65 \cdot L_{asy}$ de la sortie dudit un module de gain.

**6.** Système optique selon l'une quelconque des revendications précédentes, **caractérisé en ce que** lesdits modules de gain optique ($13^1$...$13^6$) comprennent des amplificateurs à fibre dopée à l'erbium.

**7.** Système optique selon l'une quelconque des revendications précédentes, **caractérisé en ce que** lesdits modules de gain optique ($13^1$...$13^6$) comprennent des dispositifs de pompage adaptés pour insérer dans ledit chemin de fibre optique un rayonnement de pompage approprié pour provoquer une amplification Raman dudit signal optique dans au moins des parties dudit chemin de fibre optique (12).

**8.** Système optique selon la revendication 7, **caractérisé en ce que** lesdits dispositifs de pompage sont adaptés pour insérer dans ledit chemin de fibre optique (12) ledit rayonnement de pompage dans un deuxième sens, opposé audit premier sens.

**9.** Système optique selon l'une quelconque des revendications précédentes, comprenant une station d'émission (11a), une station de réception (11b), ladite station d'émission (11a) étant connectée à une extrémité d'entrée et ladite station de réception (11b) étant connectée à une extrémité de sortie dudit chemin de fibre optique (12).

**10.** Procédé d'assemblage d'un système optique comprenant les étapes consistant à :

- prendre une pluralité M de modules de gain optique ($13^1$...$13^6$) adaptés pour amplifier un signal optique ;
- connecter ladite pluralité de modules de gain optique ($13^1$...$13^6$) par N portions de fibre optique ($14^1$...$14^5$) afin de former un chemin de fibre optique (12), lesdites portions de fibre optique ($14^1$...$14^5$) ayant une longueur moyenne $L_{amp}$ et comprenant au moins une fibre optique de transmission ayant une atténuation $\alpha$;
- disposer un dispositif de conjugaison de phase (15) sur ledit chemin de fibre optique (12) ;
- ladite pluralité de modules de gain optique ($13^1$...$13^6$), ladite longueur moyenne $L_{amp}$ et ladite atténuation $\alpha$ étant appropriées pour obtenir une distribution de puissance asymétrique dudit signal optique le long desdites portions **caractérisées par** une longueur asymétrique $L_{asy}$ ;

ledit procédé étant **caractérisé en ce que** :

- le positionnement dudit dispositif de conjugaison de phase (15) étant effectué à une distance comprise entre $0,1 \cdot L_{asy}$ et $0,7 \cdot L_{asy}$ en aval de la sortie de l'un desdits modules de gain optique.

**11.** Procédé de mise en oeuvre d'un système de transmission optique comprenant un chemin de fibre optique (12), comprenant au moins une fibre optique de transmission ayant une atténuation $\alpha$ et une pluralité de modules de gain optique ($13^1$...$13^6$) disposés le long dudit chemin de fibre optique (12) afin de définir une pluralité de portions ($14^1$...$14^5$) ayant une longueur moyenne $L_{amp}$, ledit procédé comprenant :

- insérer un signal optique à une extrémité d'entrée dudit chemin de fibre optique (12) ;
- amplifier ledit signal optique le long desdites portions, afin d'obtenir une distribution de puissance asymétrique dudit signal optique le long desdites portions **caractérisées par** une longueur asymétrique $L_{asy}$ ;
- conjuguer en phase ledit signal optique le long dudit chemin de fibre optique (12) ;

**caractérisé en ce que** :

- ladite étape de conjugaison en phase est effectuée en une position le long dudit chemin de fibre optique (12) qui se trouve à une distance comprise entre $0,1 \cdot L_{asy}$ et $0,7 \cdot L_{asy}$ en aval de la sortie de l'un desdits modules de gain optique.

**12.** Procédé d'amélioration d'un système de transmission optique comprenant un chemin de fibre optique (12), le chemin de fibre optique comportant au moins une fibre optique de transmission ayant une atténuation $\alpha$ et une pluralité de modules de gain optique ($13^1...13^6$) disposés le long de ladite fibre optique de transmission (14) afin de définir une pluralité de portions ($14^1...14^5$) ayant une longueur moyenne $L_{amp}$, ladite pluralité de modules de gain optique ($13^1... 13^6$), ladite longueur moyenne $L_{amp}$ et ladite atténuation $\alpha$ étant appropriées pour obtenir une distribution de puissance asymétrique d'un signal optique se propageant le long desdites portions **caractérisées par** une longueur asymétrique $L_{asy}$; ledit procédé comprenant :

- disposer un dispositif de conjugaison de phase (15) dans ledit chemin de fibre optique (12) à une distance comprise entre $0,1 \cdot L_{asy}$ et $0,7 \cdot L_{asy}$ en aval de la sortie de l'un desdits modules de gain optique.

Fig.1

Fig.2a

Fig.2b

Fig.3b

Fig.3a

Fig.4

EP 1 488 550 B1

Fig.5a

$z_1/L_{eff}$

K

Fig.5b

$(L_{amp} - z_2)/L_{eff}$

K

Fig.6a

Fig.6b

Fig.7

EP 1 488 550 B1

Fig.8a

Fig.8b

Fig.8c

Fig.9b

Fig.9c

Fig.9a

Fig.10

EP 1 488 550 B1

Fig.11b

Fig.11a